# EUROPÄISCHE PATENTSCHRIFT

(11) **EP 2 350 101 B1**
(45) Veröffentlichungstag und Bekanntmachung des Hinweises auf die Patenterteilung: **29.08.2012**
(21) Anmeldenummer: 09744677.7
(22) Anmeldetag: 26.10.2009
(51) Int. Cl.: C07F 7/12

(54) **VERFAHREN ZUR HERSTELLUNG VON ALKYLCHLORSILANEN DURCH UMLAGERUNGSREAKTIONEN**
METHOD FOR PREPARING AKLYL CHLOROSILANES THROUGH REARRANGEMENT REACTIONS
PROCÉDÉ DE FABRICATION D'ALKYLCHLOROSILANES PAR DES RÉACTIONS DE RÉARRANGEMENT

(30) Priorität: 30.10.2008 DE 102008043331
(43) Veröffentlichungstag der Anmeldung: 03.08.2011
(73) Patentinhaber: Wacker Chemie AG, 81737 München (DE)
(72) Erfinder: MAUTNER, Konrad, 01594 Riesa (DE); GEISSLER, Werner, 01561 Thiendorf (DE); TAMME, Gudrun, 01468 Moritzburg (DE)
(74) Vertreter: Fritz, Helmut
(86) Internationale Anmeldenummer: PCT/EP2009/064092
(87) Internationale Veröffentlichungsnummer: WO 2010/049395

(56) Entgegenhaltungen:
- US-A1- 2003 109 735
- US-B1- 6 175 029

## Beschreibung

Die Erfindung betrifft ein Verfahren zur Herstellung von Alkylchlorsilanen, die Wasserstoff aufweisen können, in Gegenwart eines Aluminiumoxidkatalysators.

Aus der Herstellung von Alkylchlorsilanen nach der direkten Synthese (Müller-Rochow-Synthese) resultieren außer dem Hauptprodukt Dialkyldichlorsilan weitere Silane, wie Tetraalkylsilan, Trialkylchlorsilan, Alkyltrichlorsilan u.a., für die wechselnder Bedarf besteht und bei Überschuss eine Verwertungsmöglichkeit benötigt wird. Bei der Destillation des Rohsilangemisches aus der direkten Synthese von Alkylchlorsilanen und Chlorsilanen fallen außerdem Vorläufe und Zwischenfraktionen an, die nicht ohne weiteres zur Weiterverarbeitung genutzt werden können.

So ist aus der Literatur hinreichend bekannt, dass Aluminiumchlorid in allen Formen, auch auf Trägermaterialien, wie Aluminiumoxiden die Umlagerungen katalysiert. In US20030109735 wird dem Aluminiumchlorid z. B. Magnesiumoxid zur Umsatzverbesserung der Reaktionen Trimethylsilan + Methyltrichlorsilan oder Trimethylchlorsilan + Methyltrichlorsilan zugesetzt. In DE 2351258 wird der Zusatz von Promotoren zu solchen Reaktionen beschrieben, die den Austrag von Aluminiumchlorid aus dem Reaktionsgefäss minimieren. EP 0971932 beschreibt dagegen den Einsatz von möglichst reinem Aluminiumoxid als Katalysator. Auch ist wie in EP 0146148 der Einsatz von Zeolithen hinreichend beschrieben.

Aufgabe der Erfindung ist es, in einem Apparat mit möglichst effektivem Katalysator alle denkbaren Umlagerungsreaktionen durchzuführen, nicht nur mit den reinen Stoffen, sondern auch mit Gemischen von Silanen mit Chlor, Wasserstoff und Alkylresten als Substituenten.

Gegenstand der Erfindung ist ein Verfahren zur Herstellung von Silanen der allgemeinen Formel (1)

RₐH_{b}SiCl_{4-a-b} (1),

bei dem Gemische aus Silanen der allgemeinen Formeln (2) und (3)

R_{c}SiCl_{4-c} (2),

R_{d}HₑSiCl_{4-d-e} (3),

wobei
- R: einen Alkylrest mit 1 bis 6 Kohlenstoffatomen,
- a: die Werte 1, 2 oder 3,
- b: die Werte 0 oder 1,
- c: die Werte 1, 2, 3 oder 4,
- d: die Werte 0, 1 oder 2 und
- e: die Werte 0, 1 oder 2 bedeuten,
in Gegenwart eines Aluminiumoxidkatalysators umgesetzt werden, der auf 100 Gewichtseile Aluminiumoxid 1 bis 10 Gewichtsteile Aluminiumchlorid und 0,5 bis 10 Gewichtsteile eines Metalloxids enthält, das ausgewählt wird aus Magnesiumoxid, Kupferoxid, Zinkoxid und deren Gemischen.

Die Herstellung von Silanen der allgemeinen Formel (1) wird durch die Anteile an Aluminiumchlorid und Metalloxid im Vergleich zum reinen Aluminiumoxid erheblich beschleunigt. Bei der Umsetzung von Silanen der allgemeinen Formeln (2) und (3) handelt es sich um Umlagerungsreaktionen.

Bevorzugt weist der Rest R 1 bis 3 Kohlenstoffatome auf. Insbesondere ist der Rest R ein Methyl- oder Ethylrest.

Bevorzugte Produkte sind Dialkyldichlorsilan, Trialkylchlorsilan und Alkylhydrogenchlorsilane.

Bevorzugt werden die Umlagerungsreaktionen [1] bis [11] durchgeführt:

CH₃SiCl₃ + H₂SiCl₂ → CH₃HSiCl₂ [1]

(CH₃)₂SiCl₂ + H₂SiCl₂ -> CH₃HSiCl₂ + (CH₃)₂HSiCl [2]

(CH₃)₃SiCl + H₂SiCl₂ -> CH₃HSiCl₂ + (CH₃)₂HSiCl [3]

(CH₃)₃SiCl + (CH₃)SiCl₃ -> (CH₃)₂SiCl₂ [4]

(CH₃)₃SiCl + (CH₃)HSiCl₂ -> (CH₃)₂HSiCl [5]

(CH₃)₃SiCl + HSiCl₃ -> (CH₃)₂SiCl₂ + CH₃HSiCl₂ + (CH₃)₂HSiCl [6]

(CH₃)₃SiCl + SiCl₄ -> CH₃SiCl₃ + (CH₃)₂SiCl₂ [7]

CH₃SiCl₃ + (CH₃)₄Si -> (CH₃)₂SiCl₂ + (CH₃)₃SiCl [8]

(CH₃)₄Si + (CH₃)₂SiCl₂ → (CH₃)₃SiCl [9]

(CH₃)₄Si + SiCl₄ + → CH₃SiCl₃ + (CH₃)₂SiCl₂ + (CH₃)₃SiCl [10]

(CH₃) ₄Si + HSiCl₃ -> (CH₃)₂SiCl₂ + (CH₃)₃SiCl +(CH₃)₂HSiCl [11]

Das Aluminiumoxid kann alpha- oder bevorzugt gamma-Aluminiumöxid sein.

Vorzugsweise weist der Aluminiumoxidkatalysator auf 100 Gewichtseile Aluminiumoxid 3 bis 6 Gewichtseile Aluminiumchlorid auf. Vorzugsweise weist der Aluminiumoxidkatalysator auf 100 Gewichtseile Aluminiumoxid 1 bis 5 Gewichtsteile des Metalloxids auf. Es können als Metalloxide oder Mischoxide alle beliebigen Oxide oder Mischoxide der Metalle Magnesium, Kupfer und Zink eingesetzt werden. Besonders bevorzugt ist Magnesiumoxid.

Vorzugsweise besitzt der Aluminiumoxidkatalysator eine BET-Oberfläche von mindestens 100 m²/g, besonders bevorzugt mindestens 230 m²/g und vorzugsweise höchstens 600 m²/g. Vorzugsweise besitzt der Aluminiumoxidkatalysator ein Porenvolumen von mindestens 0,2 cm³/g, besonders bevorzugt mindestens 0,5 cm³/g und vorzugsweise höchstens 1,5 cm³/g.

Vorzugsweise wird als Aluminiumoxidkatalysator ein Aluminiumoxid-Metalloxid Trägermaterial eingesetzt, das mit Aluminiumchlorid beschichtet ist.

Der Aluminiumoxidkatalysator kann als Pulver oder bevorzugt als Formkörper eingesetzt werden.

Das Verfahren wird bevorzugt bei mindestens 180°C, besonders bevorzugt mindestens 200°C, insbesondere mindestens 220°C und vorzugsweise höchstens 370°C, besonders bevorzugt höchstens 350°C, insbesondere höchstens 300 °C durchgeführt. Das Verfahren wird bevorzugt bei mindestens 1 bar, besonders bevorzugt mindestens 2 bar, insbesondere mindestens 4 bar und vorzugsweise höchstens 30 bar, besonders bevorzugt höchstens 15 bar, insbesondere höchstens 10 bar durchgeführt.

Als Reaktoren für das Verfahren sind alle temperierbaren Apparate, die leichtes Handling mit dem festen Katalysator erlauben, geeignet. Besonders bevorzugt werden Rohrreaktoren mit Wärmeträgerkreislauf eingesetzt, die eine günstige Temperaturführung erlauben.

Da Silan der allgemeinen Formel (3), bei der e den Wert 1 oder 2 hat, auch Umsetzungen zwischen Silanen der allgemeinen Formeln (2) und (3) fördert, bei denen e in der allgemeinen Formel (3) den Wert 0 hat, wird bei derartigen Umsetzungen vorzugsweise Silan der allgemeinen Formel (3) zugesetzt, bei der e den Wert 1 oder 2 hat. Silan der allgemeinen Formel (3), bei der e den Wert 1 oder 2 hat, weist deshalb cokatalytische Wirkung auf.
Der Anteil an Silan der allgemeinen Formel (3), bei der e den Wert 1 oder 2 hat im eingesetzten Gemisch aus Silanen der allgemeinen Formeln (2) und (3) beträgt vorzugsweise mindestens 0,5 Gew.-%, besonders bevorzugt mindestens 5 Gew.-%, insbesondere mindestens 10 Gew.-%.

Die eingesetzten Silane der allgemeinen Formel (3), bei der e den Wert 1 oder 2 hat können auch als Gemische eingesetzt werden, z.B. als Destillatfraktionen, in denen z.B. CH₃HSiCl₂, (CH₃)₂HSiCl und HSiCl₃ enthalten sind.

Der Aluminiumoxidkatalysator wird vorzugsweise hergestellt, indem Aluminiumoxid, welches die Metalloxide enthält, mit Chlorwasserstoff bei vorzugsweise mindestens 100°C, besonders bevorzugt mindestens 180°C und vorzugsweise höchstens 250°C behandelt wird.

Anschließend wird der so hergestellte Aluminiumoxidkatalysator im heißen Gasstrom, vorzugsweise unter vermindertem Druck, oder mit Trimethylchlorsilan getrocknet.

Alle vorstehenden Symbole der vorstehenden Formeln weisen ihre Bedeutungen jeweils unabhängig voneinander auf. In allen Formeln ist das Siliziumatom vierwertig.

In den folgenden Beispielen und Vergleichsbeispielen sind, falls jeweils nicht anders angegeben, alle Mengen- und Prozentangaben auf das Gewicht bezogen und sämtliche Umsetzungen werden bei einem Druck von 6,5 bar (abs.) und einer Temperatur von 300°C durchgeführt.

Für die Silane in den Tabellen wurden folgende Abkürzungen verwendet:
- TCS: : Trichlorsilan
- M1: : Methyltrichlorsilan
- M2: : Dimethyldichlorsilan
- M3: : Trimethylchlorsilan
- HM: : Methylhydrogendichlorsilan
- HM2: : Dimethylhydrogenchlorsilan

Die Beispiele wurden in einem wärmeträgerbeheizten kontinuierlich betriebenen Rohrreaktor aus Hastelloy^{®} HB3 mit 50 mm Durchmesser und 700 mm Länge mit einem vorgeschalteten Eduktverdampfer, einer Wärmeträgervorlauftemperatur von 300°C und einem Reaktorüberdruck von 5,5 bar durchgeführt. Der Reaktor war mit vorbehandeltem Aluminiumoxid-Extrudat von ca.2,5 * 8 mm gefüllt.

Das reine Aluminiumoxid hatte eine BET-Oberfläche von 247 m²/g und ein Porenvolumen von 0,9 cm³/g. Das Aluminiumoxid mit 2% Magnesiumoxidbeimischung hatte eine BET-Oberfläche von 227 m²/g und ein Porenvolumen von 0,87 cm³/g. Durch die Behandlung im Chlorwasserstoffstrom wurden 4,5% Aluminiumchlorid aus dem Aluminiumoxid gebildet.

Die Produkte wurden mittels GC (auf Masse % kalibriert) analysiert.

### Beispiel 1:

Die Katalysatormenge beträgt 1,5 1. Durch das erfindungsgemässe Verfahren kann der Durchsatz bei gleichbleibendem Umsatz erhöht werden.

| Aluminiumoxid | Eduktdurchsatz | Edukte-Molverhältnis | Zielprodukte |
|---|---|---|---|
| rein * | 300 g/h | 1M1 : 1M3+5%HM | 36,8 % M2 |
| mit 2%MgO | 500 g/h | 1M1 : 1M3+5%HM | 36 % M2 |

| | | | |
|---|---|---|---|
| * nicht erfindungsgemäss | | | |

### Beispiel 2:

Die Katalysatormenge beträgt 0,5 l. Durch das erfindungsgemässe Verfahren kann bei gleichem Durchsatz die Ausbeute erhöht werden.

| Aluminiumoxid | Eduktdurchsatz | Edukte-Molverhältnis | Zielprodukte |
|---|---|---|---|
| rein * | 100 g/h | 1M1 : 1M3+5%HM | 32 % M2 |
| mit 2%MgO | 100 g/h | 1M1 : 1M3+5%HM | 51 % M2 |

| | | | |
|---|---|---|---|
| * nicht erfindungsgemäss | | | |

### Beispiel 3:

Die Katalysatormenge beträgt 1,5 l. Durch das erfindungsgemässe Verfahren kann der Durchsatz wesentlich erhöht werden.

| Aluminiumoxid | Eduktdurchsatz | Edukte-Molverhältnis | Zielprodukte |
|---|---|---|---|
| rein* | 1000 g/h | 1M3 : 1HM | 13 % HM2 |
| mit 2%MgO | 1800 g/h | 1M3 : 1HM | 13 % HM2 |

| | | | |
|---|---|---|---|
| * nicht erfindungsgemäss | | | |

### Beispiel 4:

Die Katalysatormenge beträgt 0,5 l. Durch das erfindungsgemässe Verfahren kann bei gleichem Durchsatz die Ausbeute erhöht werden.

| Aluminiumoxid | Eduktdurchsatz | Edukte-Molverhältnis | Zielprodukte |
|---|---|---|---|
| rein* | 110 g/h | 1M3 : 2 TCS | 24% M2+0,4 % HM2+3%HM |
| mit 2%MgO | 110 g/h | 1M3 : 2 TCS | 41% M2+2 % HM2+5%HM |

| | | | |
|---|---|---|---|
| * nicht erfindungsgemäss | | | |

## Patentansprüche

1. Verfahren zur Herstellung von Silanen der allgemeinen Formel (1)
RₐH_{b}SiCl_{4-a-b} (1),
bei dem Gemische aus Silanen der allgemeinen Formeln (2) und (3)
R_{c}SiCl_{4-c} (2).
R_{d}HₑSiCl_{4-d-e} (3),
wobei
R einen Alkylrest mit 1 bis 6 Kohlenstoffatomen,
a die Werte 1, 2 oder 3,
b die Werte 0 oder 1,
c die Werte 1, 2, 3 oder 4,
d die Werte 0, 1 oder 2 und
e die Werte 0, 1 oder 2 bedeuten,
in Gegenwart eines Aluminiumoxidkatalysators umgesetzt werden, der auf 100 Gewichtseile Aluminiumoxid 1 bis 10 Gewichtsteile Aluminiumchlorid und 0,5 bis 10 Gewichtsteile eines Metalloxids enthält, das ausgewählt wird aus Magnesiumoxid, Kupferoxid, Zinkoxid und deren Gemischen.

2. Verfahren nach Anspruch 1, bei dem der Rest R ein Methyloder Ethylrest ist.

3. Verfahren nach Anspruch 1 oder 2, bei dem der Aluminiumoxidkatalysator eine BET-Oberfläche von mindestens 100 m²/g aufweist.

4. Verfahren nach Anspruch 1 bis 3, bei dem der Aluminiumoxidkatalysator ein Porenvolumen von mindestens 0,5 cm³/g aufweist.

5. Verfahren nach Anspruch 1 bis 4, bei dem als Aluminiumoxidkatalysator ein Aluminiumoxid-Metalloxid Trägermaterial eingesetzt wird, das mit Aluminiumchlorid beschichtet ist.

6. Verfahren nach Anspruch 1 bis 5, bei dem die Temperatur 200°C bis 350°C beträgt.

## Claims

1. Process for preparing silanes of the general formula (1)
RₐH_{b}SiCl_{4-a-b} (1)
in which mixtures of silanes of the general formulae (2) and (3)
R_{c}SiCl_{4-c} (2)
R_{d}HₑSiCl_{4-d-e} (3)
where
R is an alkyl radical having 1 to 6 carbon atoms,
a is 1, 2 or 3,
b is 0 or 1,
c is 1, 2, 3 or 4,
d is 0, 1 or 2 and
e is 0, 1 or 2,
are converted in the presence of an alumina catalyst which comprises, per 100 parts by weight of alumina, 1 to 10 parts by weight of aluminum chloride and 0.5 to 10 parts by weight of a metal oxide selected from magnesium oxide, copper oxide, zinc oxide and mixtures thereof.

2. Process according to Claim 1, in which the R radical is a methyl or ethyl radical.

3. Process according to Claim 1 or 2, in which the alumina catalyst has a BET surface area of at least 100 m²/g.

4. Process according to Claims 1 to 3, in which the alumina catalyst has a pore volume of at least 0.5 cm³/g.

5. Process according to Claims 1 to 4, in which the alumina catalyst used is an alumina-metal oxide support material coated with aluminum chloride.

6. Process according to Claims 1 to 5, in which the temperature is 200°C to 350°C.

## Revendications

1. Procédé pour la préparation de silanes de formule générale (1)
RₐH_{b}SiCl_{4-a-b} (1),
dans lequel on fait réagir des mélanges de silanes de formules générales (2) et (3)
R_{c}SiCl_{4-c} (2),
R_{d}HₑSiCl_{4-d-e} (3),
où
R représente un radical alkyle ayant de 1 à 6 atomes de carbone,
a représente les valeurs 1, 2 ou 3,
b représente les valeurs 0 ou 1,
c représente les valeurs 1, 2, 3 ou 4,
d représente les valeurs 0, 1 ou 2 et
e représente les valeurs 0, 1 ou 2,
en présence d'un catalyseur à base d'oxyde d'aluminium qui pour 100 parties en poids d'oxyde d'aluminium contient 1 à 10 parties en poids de chlorure d'aluminium et 0,5 à 10 parties en poids d'un oxyde métallique qui est choisi parmi l'oxyde de magnésium, l'oxyde de cuivre, l'oxyde de zinc et des mélanges de ceux-ci.

2. Procédé selon la revendication 1, dans lequel le radical R est un radical méthyle ou éthyle.

3. Procédé selon la revendication 1 ou 2, dans lequel le catalyseur à base d'oxyde d'aluminium présente une surface BET d'au moins 100 m²/g.

4. Procédé selon l'une quelconque des revendications 1 à 3, dans lequel le catalyseur à base d'oxyde d'aluminium présente un volume de pores d'au moins 0,5 cm³/g.

5. Procédé selon l'une quelconque des revendications 1 à 4, dans lequel on utilise comme catalyseur à base d'oxyde d'aluminium une matière de support de type oxyde d'aluminium-oxyde métallique qui est enrobée avec du chlorure d'aluminium.

6. Procédé selon l'une quelconque des revendications 1 à 5, dans lequel la température est de 200 °C à 350 °C.
